(19) Europäisches Patentamt
European Patent Office
Office européen des brevets

(11) **EP 0 396 918 B1**

(12) **FASCICULE DE BREVET EUROPEEN**

(45) Date de publication et mention
de la délivrance du brevet:
**15.10.1997  Bulletin 1997/42**

(51) Int Cl.6: **G05D 1/03**

(21) Numéro de dépôt: **90106750.4**

(22) Date de dépôt: **09.04.1990**

(54) **Dispositif de guidage de véhicules sur une voie non matérialisée**

Anordnung zum Spurführen von gleisfreien Falzungen

Device for guiding vehicles without ground rail

(84) Etats contractants désignés:
**AT BE CH DE DK ES FR GB GR IT LI LU NL SE**

(30) Priorité: **14.04.1989  FR 8904973**

(43) Date de publication de la demande:
**14.11.1990  Bulletin 1990/46**

(73) Titulaire: **GEC ALSTHOM SA**
**75116 Paris (FR)**

(72) Inventeurs:
• **Heddebaut, Marc**
**F-59 262 Sainghin en melantois (FR)**
• **Duhot, Denis**
**F-75002 Paris (FR)**
• **Degauque, Pierre**
**F-59130 Lambersart (FR)**

(74) Mandataire: **Gosse, Michel et al**
**c/o ALCATEL ALSTHOM,**
**Département de Propriété Industrielle,**
**30, avenue Kléber**
**75116 Paris (FR)**

(56) Documents cités:
EP-A- 0 274 055          DE-A- 1 902 037
DE-A- 2 445 001          DE-A- 2 648 105
DE-A- 3 001 718          FR-A- 2 329 008

• PATENT ABSTRACTS OF JAPAN vol. 5, no. 84
(P-64)(765), 2 Juin 1981; & JP-A-5631109
(HITACHI)
• PATENT ABSTRACTS OF JAPAN vol. 9, no. 6
(P-326)(1729), 11 janvier 1985; & JP-A-59154512
(DIAFUKU)
• PATENT ABSTRACTS OF JAPAN vol. 9, no. 40
(P-336), 20 février 1985; & JP-A-59180611
(DAIFUKU)

## Description

La présente invention concerne un dispositif de guidage de véhicules, notamment de véhicules de transport en commun, sur une voie non matérialisée, grâce au champ magnétique issu d'un organe émetteur de ce champ disposé dans l'axe de la voie à suivre, et comprenant deux capteurs magnétiques de réception du champ disposés sur le véhicule.

On connaît déjà une technique de guidage latéral de véhicules, notamment de chariots de transport d'objets en usine, grâce au champ magnétique émis par un fil conducteur disposés dans l'axe de la voie à suivre par le véhicule. Le véhicule est muni d'au moins une paire de bobines de détection du champ engendré par le fil. Une telle technique est décrite par exemple dans le document FR-A-2 278 525.

Il a été également décrit dans la publication Recherche Transports Sécurité, mars 1984, p. 45-47, un dispositif de guidage électronique d'autobus, dit "projet Spurbus", à l'aide du champ magnétique circulaire engendré par un câble parcouru par un courant de faible intensité à basse fréquence. Il est disposé dans le véhicule à la même hauteur deux bobines perpendiculaires, d'axes respectivement horizontal et vertical, reliées à des organes de détection du déphasage des tensions induites par le champ.

Le document GB-A-1 299 701 décrit un dispositif de guidage conforme au préambule de la revendication 1.

De tels dispositifs permettent d'assurer un guidage latéral satisfaisant des véhicules, mais sont impuissants si l'on veut en outre contrôler leur vitesse et leur position.

On doit pour ce type de guidage recourir à un système de transmission par radio ou à l'aide d'un guide d'ondes hyperfréquences parallèle à la voie à suivre par le véhicule, le système à guide d'ondes hyperfréquences ayant fait l'objet de la demande de brevet FR-A-2 612 715 du 18 mars 1987 de la demanderesse.

Il était prévu dans cette demande de brevet de disposer le guide d'ondes hyperfréquences, soit latéralement par rapport à la voie à suivre, soit enterré dans l'axe de cette dernière.

Il n'était cependant pas possible d'envisager d'utiliser un guide d'ondes hyperfréquences enterré dans l'axe de la voie à suivre pour assurer également le guidage latéral du véhicule, car on pouvait prévoir une très mauvaise précision pour ce dernier guidage, l'incertitude sur le bon positionnement latéral pouvant être au moins de l'ordre de grandeur de la largeur du guide d'ondes.

La présente invention a pour but de procurer un dispositif de guidage de véhicules sur une voie non matérialisée, qui assure en plus du guidage en position et/ou en vitesse un guidage latéral précis, tel qu'il serait nécessaire notamment pour des véhicules de transport en commun.

Le dispositif selon l'invention est caractérisé dans la revendication 1.

Selon une première variante de l'invention, les capteurs magnétiques sont constitués par des circuits accordés à la fréquence du signal émis par le guide d'ondes, comportant chacun un bobinage muni d'un noyau magnétique, les deux bobinages étant parallèles, écartés l'un de l'autre pèrpendiculairement à l'axe du véhicule et à la même hauteur, et des organes de mesure des tensions induites aux bornes de ces bobinages.

Cette première variante répond en outre de préférence à au moins l'une des caractéristiques suivantes :

- Les deux bobinages sont d'axe vertical.
- Les bobinages des capteurs sont espacés de la largeur du guide d'ondes.
- Il comporte deux groupes de capteurs disposés à des hauteurs différentes et des moyens pour déterminer à partir de leurs indications le débattement latéral indépendamment de la hauteur des capteurs au-dessus du guide d'ondes.

Selon une seconde variante de l'invention, l'un des capteurs est d'axe vertical, l'autre d'axe horizontal, tous deux sont dans l'axe du véhicule et à la même hauteur, et ils sont reliés à un organe de mesure du déphasage des tensions qui y sont induites.

Le dispositif de cette seconde variante comporte de préférence deux groupes de capteurs à des hauteurs différentes, et des moyens pour déterminer à partir de leurs indications le déphasage des tensions induites indépendamment de la hauteur des groupes de capteurs.

Il est décrit ci-après, à titre d'exemples et en référence aux figures schématiques du dessin annexé, des dispositifs de guidage latéral d'un véhicule routier de transport en commun selon l'invention. En ce qui concerne leur guidage en position et en vitesse, il est assuré en munissant le véhicule d'antennes d'émission et de réception d'ondes hyperfréquences, et en reliant le guide d'ondes à un émetteur et un récepteur d'ondes hyperfréquences disposés dans un poste de contrôle de trafic, comme décrit dans la demande de brevet FR-A-2612715 du 18 mars 1987.

La structure du guide d'ondes, afin de lui permettre un guidage en position et en vitesse sur son trajet par communications en hyperfréquences, sera par ailleurs celle faisant l'objet de la demande de brevet FR-A-2608119 de la demanderesse.

La figure 1 représente deux capteurs de mesure parallèles d'axe vertical disposés sur le véhicule à guider, et le guide d'ondes enterré dans l'axe de de la voie à suivre par le véhicule, le véhicule étant décalé sur la droite de l'axe de la voie.

La figure 2 représente les composantes horizontale et verticale du champ reçu par un capteur, en fonction de sa position par rapport à l'axe du guide d'ondes.

La figure 3 représente les composantes verticales du champ reçu par deux capteurs disposés de part et d'autre de l'axe du véhicule.

La figure 4 représente un dispositif de guidage à deux couples de capteurs à des hauteurs différentes, permettant d'obtenir le décalage indépendamment de la hauteur des capteurs au-dessus du guide d'ondes.

La figure 5 représente un dispositif de guidage par mesure du déphasage des tensions induites dans deux bobines disposées dans l'axe du véhicule, l'une d'axe vertical et l'autre d'axe horizontal.

La figure 6 représente la variation des tensions induites dans les deux bobines de la figure 5 en fonction du rapport x/y (y étant la hauteur des capteurs au-dessus du guide d'ondes et x leur décalage latéral par rapport à l'axe du guide d'ondes).

La figure 7 représente le principe d'un appareillage de mesure d'un décalage latéral par rapport à l'axe d'un guide d'ondes.

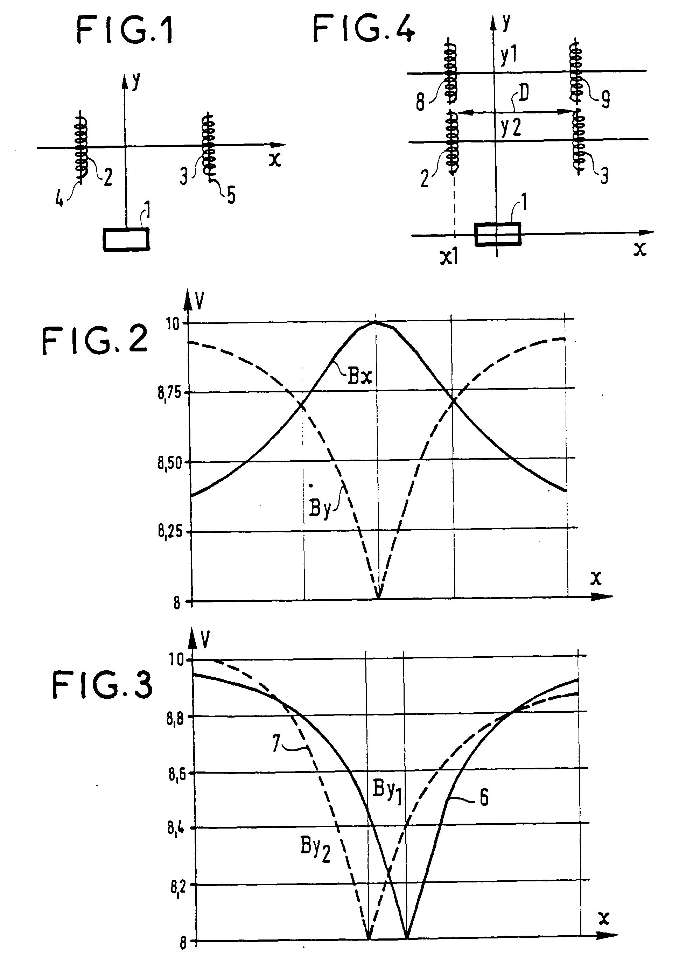

Dans la figure 1, le guide d'ondes 1 est enterré dans l'axe de la voie à suivre par le véhicule. Il est disposé à bord du véhicule à guider deux circuits accordés sur la fréquence (relativement basse) du rayonnement émis par le guide d'ondes. Il apparaît dans les bobinages 2 et 3 des champs verticaux $By1$ et $By2$, dont la valeur absolue dépend de leur écart horizontal par rapport à la verticale de l'axe du guide d'ondes. On démontre que le champ rayonné a pour expression générale pour un fil très long parcouru par un courant $I = I_0 \cos \omega t$ la valeur $B_0 = \frac{\mu_0}{2} \frac{I}{r}$ $\mu_0$ étant la perméabilité magnétique du milieu, et $r$ la distance du point de mesure à l'axe du fil. dont les composantes horizontale et verticale sont en valeur absolue

$$|Bx| = \frac{\mu_0}{2\pi} \cdot I \frac{y}{\sqrt{y^2 + x^2}}$$

$y$ étant la hauteur du point de mesure au-dessus du fil et $x$ son abscisse.
et

$$|By| = \frac{\mu_0}{2\pi} \cdot I \frac{x}{\sqrt{y^2 + x^2}}$$

L'amplitude des deux composantes du champ en fonction de l'abscisse horizontale du point de mesure par rapport au fil, perpendiculaire à ce dernier, est représentée par les courbes de la figure 2. La composante horizontale est maximale et la composante verticale sensiblement nulle au-dessus du fil. On peut montrer que l'expression du champ en fonction de l'abscisse par rapport à l'axe d'un guide d'ondes, perpendiculairement à ce dernier, est de la même forme que ci-dessus.

Si l'on dispose verticalement les bobines 2 et 3, munies de noyaux magnétiques 4, 5, à bord du véhicule circulant sur une voie dans l'axe de laquelle est enterré un guide d'ondes 1, les inductions verticales $By1$ et $By2$ dans les bobines varieront comme représenté par les courbes 6 et 7 de la figure 3. L'observation des tensions induites aux bornes de ces bobines permet alors de repérer l'écart latéral de l'axe du véhicule par rapport à l'axe de la voie.

Les valeurs des tensions induites dans les bobines dépendent de leur ordonnée $y$ au-dessus du guide d'ondes. On peut cependant s'affranchir de cette dépendance. En effet soit $S$ le signal utile

$$S = By^2 = K^2 \frac{x^2}{x^2 + y^2}$$

avec

$$K = \sqrt{\frac{\mu I}{2\pi}}$$

ainsi

$$x = \sqrt{\frac{S}{K\text{-}S}}\, y$$

L'information S permet donc de connaître x pour une ordonnée y des bobines donnée, et x est proportionnel à y.
On peut ainsi déterminer l'écart latéral x en mesurant les champs $By_1^1$ , $By_1^2$ , $By_2^1$ et $By_2^2$ dans deux jeux de bobines verticales espacées verticalement d'une distance D, comme représenté en fig.4. Les relations

$$x_1 = K_1\, y_1$$

$$x_1 = K_2\, (y_1 + D)$$

permettent de déterminer

$$x_1 = \frac{K_2 D}{1 - \dfrac{K_2}{K_1}}$$

On peut aussi déterminer l'écartement latéral par l'intermédiaire de la mesure du déphasage entre les composantes de champ $B_x$ et $B_y$. On utilise à cet effet des capteurs constitués par des solénoïdes montés sur barreaux de ferrite, accordés à la fréquence d'émission du guide d'ondes par une capacité parallèle, disposés de préférence dans l'axe du véhicule, et dont l'un est d'axe vertical, et l'autre d'axe horizontal. Ces capteurs intégrent le champ magnétique sur une longueur L. Ils reçoivent les signaux

$$Sx = \int_{x_1}^{x_2} Bx\,dx \quad \text{et} \quad Sy = \int_{y_1}^{y_2} By\,dy$$

$$Sx = \int_{x_1}^{x_2} \frac{\mu_o I}{2\pi} \; \frac{y}{\sqrt{y^2 + x^2}} \; \cos\left(wt - k\sqrt{y^2 + x^2}\right) dx$$

$$Sy = \int_{y_1}^{y_1} \frac{\mu_o I}{2\pi} \; \frac{x}{\sqrt{y^2 + x^2}} \; \cos\left(wt - k\sqrt{y^2 + x^2}\right) dy$$

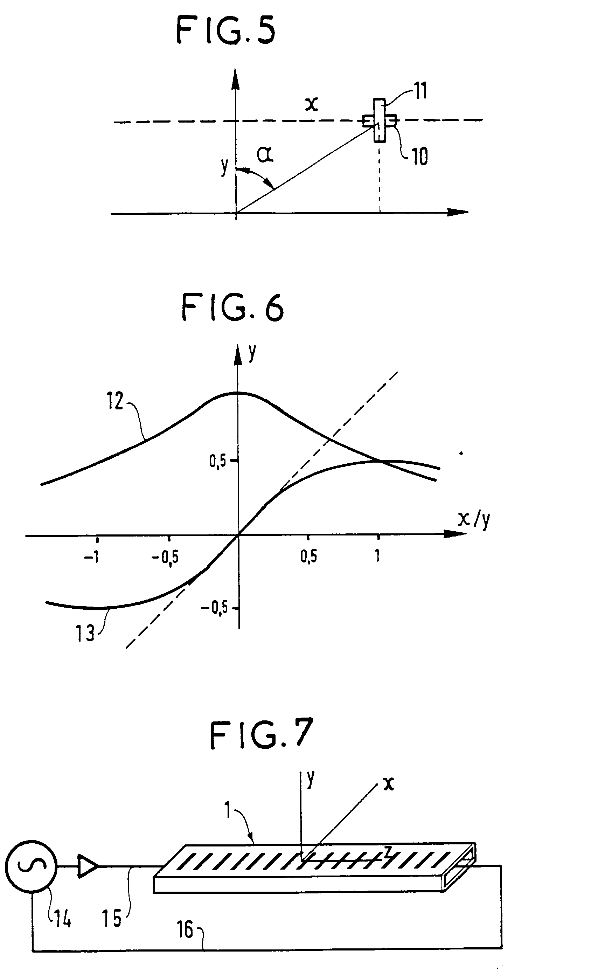

Le signal utile est constitué par le déphasage entre Sx et Sy.
Le principe de la mesure est représenté en figure 5, et les valeurs des tensions aux bornes des solénoïdes sont représentées par les courbes de la figure 6. En désignant par $U_h$ la tension induite dans le solénoïde 10 d'axe horizontal et $U_v$ celle induite dans le solénoïde 11 d'axe vertical, par x l'abscisse de l'axe des solénoïdes et par y leur hauteur au-dessus du guide d'ondes, et par $\alpha$ l'angle de tangente $\frac{x}{y}$ , on a

$$U_h = k \cos^2\alpha$$

$$U_v = k \cos\alpha \sin\alpha$$

soit

$$\frac{U_v}{U_h} = \text{tg}\alpha = \frac{x}{y}$$

En pratique la présence de la masse métallique du véhicule, et éventuellement celle d'armatures métalliques dans la chaussée, introduisent un caractère non linéaire dans cette fonction.

En fonction du rapport x/y, les tensions induites aux bornes des solénoïdes horizontal 10 et vertical 11 varient comme représenté par les courbes 12 et 13 de la figure 6.

Le déphasage, nul lorsque les solénoïdes sont sur l'axe vertical du guide d'ondes, varie entre $+\frac{\pi}{2}$ et $-\frac{\pi}{2}$ lorsqu'il s'écarte jusqu'à l'infini de part et d'autre de cet axe. La mesure du déphasage permet donc de déterminer l'écartement de l'axe du véhicule par rapport à l'axe de la voie.

Des essais de dispositifs selon l'invention ont été effectués sur un système expérimental à petite échelle, représenté en fig.7, comportant un guide d'ondes rectangulaire homogène de 20m de long, de largeur 10cm, émettant par des ouvertures de sa face supérieure, afin

- de vérifier si le guide d'ondes pouvait être assimilé à un fil en ce qui concerne le champ émis, et si un tel système était fiable et précis
- de comparer les performances des systèmes du type filoguidé à fréquence relativement faible aux systèmes à guide d'ondes fonctionnant en hyperfréquences.

Le guide d'ondes 1 a été relié par une connexion 15 à une extrémité à un générateur sinusoïdal 14 de fréquence 30 kHz émettant une puissance de 10 watts. Il a été branché à l'autre extrémité de guide d'ondes un fil de retour 16 formant une boucle très lâche, de façon à éviter de rayonner par une boucle. On peut aussi envisager un retour par la terre, en connectant l'extrémité du guide opposée au générateur à une prise de terre.

On a effectué à l'aide de ce guide d'ondes des mesures en statique (coordonnée z constante) d'une induction I B (x) I et du déphasage $\Delta\psi$ I Bx-By I , et en dynamique, les coordonnées x et y étant fixées, de B(z) et $\Delta\psi$(z).

Les capteurs utilisés pour la mesure ont été des inductances de 30 tours sur des noyaux de ferrite de perméabilité $\mu_r = 500$, de diamètre 1,5cm, la self obtenue, de 0,35 millihenrys, étant accordée par une capacité de 80nF à 30kHz.

Une première mesure du signal S(x) pour des ordonnées y =10 cm et y = 18cm, sur des capteurs magnétiques écartés de 15cm, a montré que ce signal était directement proportionnel à la hauteur au-dessus du guide d'ondes. On peut donc déterminer le champ indépendamment de la hauteur des capteurs avec deux paires de capteurs à deux hauteurs différentes.

On a disposé une tôle de 1m$^2$ au-dessus des capteurs, et vérifié qu'elle n'avait aucune influence sur leurs signaux.

Les mesures en dynamique le long du guide d'ondes montrent que le signal varie très peu dans le cas d'ondes à fréquence relativement basse, les fentes dans le guide d'ondes étant sans influence. L'erreur de position sur l'écartement par rapport à l'axe de la voie peut être estimée à $\pm$ 3mm, valeur très satisfaisante pour le guidage d'un véhicule.

On a disposé une barre métallique parallèle au guide de largeur 4cm et hauteur 6cm, le long du guide, à 4cm de celui-ci. Celle-ci rayonne alors un champ et vient perturber les mesures. Il y a donc lieu d'éviter un environnement métallique trop proche du guide, notamment des pièces métalliques parallèles au guide d'ondes enterré dans la voie.

Les vibrations des antennes entraînant des fluctuations des signaux, il sera bon de monter les capteurs sur des amortisseurs.

On a également mesuré le déphasage entre les composantes Bx et By avec les capteurs mentionnés précédemment (l'un d'axe vertical et l'autre d'axe horizontal), à l'aide d'antennes de longueur 30cm, sur un vecteur mètre.

En mesure en statique (coordonnée z constante), on constate que le déphasage varie entre $-\frac{\pi}{2}$ et $+\frac{\pi}{2}$ .

La sensibilité au voisinage d'un écartement latéral nul est de 1,6 degrés et 5,2 degrés respectivement pour des capteurs à des hauteurs de 8cm et de 15cm. La sensibilité est pratiquement proportionnelle à la hauteur. On peut donc en utilisant deux jeux de capteurs à des hauteurs différentes obtenir un signal fonction de l'écartement latéral uniquement.

Une mesure en dynamique (le long du guide d'ondes) a montré que les fluctuations du déphasage étaient négligeables même au passage d'une bride reliant deux tronçons de guide d'ondes. L'erreur sur l'écartement latéral est de l'ordre du mm.

En disposant une tôle métallique formant plan réflecteur au-dessus des capteurs ou une barre métallique parallèle au guide d'ondes à proximité de celui-ci, on n'a observé que des perturbations négligeables.

**Revendications**

1.  Dispositif de guidage latéral de véhicules sur une voie non matérialisée, grâce au champ magnétique issu d'un conducteur parcouru par un courant disposé dans l'axe de la voie à suivre et comprenant deux capteurs magnétiques (2', 3) de réception du champ disposés sur le véhicule, caractérisé en ce que le conducteur est un guide d'ondes (1) fendu relié pour la détermination du débattement latéral par rapport à l'axe de la voie à un générateur de signaux sinusoïdaux (14) à une fréquence comprise entre 1 et 100 kHz, et pour un guidage en position longitudinale et/ou en vitesse à un émetteur d'ondes hyperfréquences.

2. Dispositif selon la revendication 1, les deux capteurs magnétiques comportant chacun un bobinage, caractérisé en ce que les deux bobinages sont parallèles, écartés l'un de l'autre perpendiculairement à l'axe du véhicule et à la même hauteur.

3. Dispositif selon la revendication 2, caractérisé en ce que les deux bobinages sont d'axe vertical.

4. Dispositif selon les revendications 2 ou 3, caractérisé en ce que les bobinages des capteurs sont espacés de la largeur du guide d'ondes.

5. Dispositif selon l'une des revendications 2 à 4, caractérisé en ce qu'il comporte deux groupes de capteurs (2, 3 ; 8, 9) disposés à des hauteurs différentes et des moyens pour déterminer à partir de leurs indications le débattement latéral indépendamment de la hauteur des capteurs au-dessus du guide d'ondes.

6. Dispositif selon la revendication 2, caractérisé en ce que l'un des capteurs (10) est d'axe vertical, l'autre (11) d'axe horizontal, en ce que tous deux sont dans l'axe du véhicule et à la même hauteur, et en ce qu'ils sont reliés à un organe de mesure du déphasage des tensions qui y sont induites.

7. Dispositif selon la revendication 6, caractérisé en ce qu'il comporte deux groupes de capteurs à des hauteurs différentes, et des moyens pour déterminer à partir de leurs indications le déphasage des tensions induites indépendamment de la hauteur des groupes de capteurs.

8. Dispositif selon l'une des revendications 1 à 7, caractérisé en ce que la fréquence du rayonnement du guide d'ondes est d'environ 30 kHz.

**Patentansprüche**

1. Vorrichtung zur seitlichen Führung von Fahrzeugen auf einer schienenlosen Fahrstrecke mit Hilfe eines Magnetfelds, das von einem stromdurchflossenen und in der Achse der Fahrstrecke verlaufenden Leiter ausgeht, wobei zwei Magnetsonden (2, 3) zum Empfang des Feldes am Fahrzeug angebracht sind, dadurch gekennzeichnet, daß der Leiter ein geschlitzter Wellenleiter (1) ist, der zur Bestimmung der seitlichen Abweichung bezüglich der Achse der Strecke an einen Generator für sinusförmige Signale (14) mit einer Frequenz zwischen 1 und 100 kHz und für eine Führung hinsichtlich der Lage in Längsrichtung und/oder der Geschwindigkeit an einen Hochfrequenzsender angeschlossen ist.

2. Vorrichtung nach Anspruch 1, bei der die beiden Magnetsonden je eine Spule enthalten, dadurch gekennzeichnet, daß die beiden Spulen parallel und in einem Abstand senkrecht zur Achse des Fahrzeugs sowie in gleicher Höhe angeordnet sind.

3. Vorrichtung nach Anspruch 2, dadurch gekennzeichnet, daß die beiden Spulen senkrechte Achsen besitzen.

4. Vorrichtung nach den Ansprüchen 2 oder 3, dadurch gekennzeichnet, daß die Spulen der Sonden einen Abstand voneinander besitzen, der der Breite des Wellenleiters entspricht.

5. Vorrichtung nach einem der Ansprüche 2 bis 4, dadurch gekennzeichnet, daß sie zwei Gruppen von Sonden (2, 3; 8, 9), die in unterschiedlichen Höhenlagen angeordnet sind, sowie Mittel zur Bestimmung der seitlichen Abweichung unabhängig von der Höhe der Sonden oberhalb des Wellenleiter ausgehend von den Sondensignalen aufweist.

6. Vorrichtung nach Anspruch 2, dadurch gekennzeichnet, daß eine der Sonden (10) eine vertikale Achse und die andere (11) eine horizontale Achse besitzt, daß beide sich in der Achse des Fahrzeugs und in gleicher Höhe befinden und daß sie an ein Organ zur Messung der Phasenverschiebung der in ihnen induzierten Spannungen angeschlossen sind.

**7.** Vorrichtung nach Anspruch 6, dadurch gekennzeichnet, daß sie zwei Gruppen von Sonden in unterschiedlicher Höhenlage sowie Mittel zur Bestimmung der Phasenverschiebung der induzierten Spannungen aufgrund der Sondensignale unabhängig von der Höhe der Gruppen von Sonden aufweist.

**8.** Vorrichtung nach einem der Ansprüche 1 bis 7, dadurch gekennzeichnet, daß die Strahlungsfrequenz des Wellenleiters etwa 30 kHz beträgt.

**Claims**

**1.** Device for lateral guidance of vehicles on a virtual track by means of a magnetic field from a conductor carrying a current disposed on the axis of the track to be followed and comprising two magnetic sensors (2, 3) receiving the field disposed on the vehicle, characterised in that the conductor is a slotted waveguide (1) connected for determining the lateral offset relative to the axis of the track to a generator (14) for producing sinusoidal signals at a frequency between 1 and 100 kHz and for longitudinal positional and/or speed guidance to a microwave transmitter.

**2.** Device according to claim 1, each of the two magnetic sensors including a coil, characterised in that the two coils are parallel, spaced from each other perpendicularly to the axis of the vehicle and at the same height.

**3.** Device according to claim 2 characterised in that the two coils have a vertical axis.

**4.** Device according to claim 2 or claim 3 characterised in that the coils of the sensors are spaced by the width of the waveguide.

**5.** Device according to any one of claims 2 through 4 characterised in that it comprises two groups of sensors (2, 3; 8, 9) disposed at different heights and means for determining from their outputs the lateral offset independently of the height of the sensors above the waveguide.

**6.** Device according to claim 2 characterised in that one of the sensors (10) has a vertical axis and the other (11) has a horizontal axis, in that both are on the axis of the vehicle and at the same height, and in that they are connected to a member for measuring the phase difference between the voltages induced in them.

**7.** Device according to claim 6 characterised in that it comprises two groups of sensors at different heights and means for determining from their outputs the relative phase of the voltages induced independently of the height of the groups of sensors.

**8.** Device according to any one of claims 1 through 7 characterised in that the frequency at which the waveguide radiates is approximately 30 kHz.

# FIG.1

# FIG.4

# FIG.2

# FIG.3

# FIG.5

# FIG.6

# FIG.7